(19) Europäisches Patentamt
European Patent Office
Office européen des brevets

(11) Publication number: 0 046 954
A2

(12) # EUROPEAN PATENT APPLICATION

(21) Application number: 81106537.4

(22) Date of filing: 22.08.81

(51) Int. Cl.³: C 08 G 69/48
C 08 L 77/10, C 08 J 7/12
D 01 F 6/60

(30) Priority: 25.08.80 JP 115822/80
25.08.80 JP 115823/80

(43) Date of publication of application: 10.03.82 Bulletin 82/10

(84) Designated Contracting States: DE FR GB NL

(71) Applicant: TEIJIN LIMITED
11, 1-Chome, Minamihonmachi Higashi-ku
Osaka-shi Osaka(JP)

(72) Inventor: Tamura, Yorikazu
Teijin Yamanouchi Apt. 13 3-1-40, Yamate-cho
Iwakuni-shi Yamaguchi-ken(JP)

(72) Inventor: Nakamura, Tsutomu
99-1, Yatsugami Kuga-cho
Kuga-gun Yamaguchi-ken(JP)

(72) Inventor: Shimada, Keizo
Teijin Yamanouchi Apt. 17 3-1-40, Yamate-cho
Iwakuni-shi Yamaguchi-ken(JP)

(74) Representative: Hoeger, Stellrecht & Partner
Uhlandstrasse 14c
D-7000 Stuttgart 1(DE)

(54) **Shaped article of aromatic polyamide.**

(57) A shaped article, such as film or fiber, of an aromatic polyamide is provided. The shaped article is prepared by incorporating in an aromatic polyamide 0.5-30 wt. %, based on the aromatic polyamide, of a silicone compound such as a compound of the formula: $X'Si(OR')_3$ (wherein R' is alkyl and X' is an organic functional group), and then, treating the resulting polymer composition with heat, ultraviolet rays and/or electron beams. In addition to the silicone compound, a minor amount of a specified crosslinking compound may be incorporated in the aromatic polyamide. The shaped article exhibits improved heat resistance, electric characteristics and dimentional stability.

EP 0 046 954 A2

# SHAPED ARTICLE OF AROMATIC POLYAMIDE

## BACKGROUND OF THE INVENTION

### (1) Field of the Invention

The present invention relates to an aromatic polyamide shaped article which is highly improved in the heat resistance, electric characteristics and dimensional stability. More particularly, it relates to an aromatic polyamide shaped article in which the electric characteristics, dimension stability and heat resistance are highly improved by incorporation of a silicone compound and an optional specific crosslinking compound and treatment with heat, an ultraviolet ray or an electron beam.

### (2) Description of the Prior Art

Aromatic polyamides have good heat resistance and mechanical properties, and aromatic polyamides such as p-phyenylene terephthalamide type polymers, halogen--substituted p-phenylene terephthalamide type polymers, p-phenylene isophthalamide type polymers and m-phenylene isophthalamide type polymers are now used widely in fields of fibers, synthetic papers and the like and they draw particular attention as polymeric materials.

Shaped articles of these aromatic polyamides, such as films and sheets, have the above-mentioned desirable properties, but they are inferior to shaped articles of polyimides such as polyimide films in the electric characteristics and they are poor in the dimensional stability because of the hygroscopic characteristic thereof. Accordingly, shaped articles of these aromatic polyamides are not completely satisfactory as high-quality shaped articles, and improvements of various properties are now eagerly desired in shaped articles of these aromatic polyamides.

As means for solving this problem, there have been proposed a method in which a film of an m-pheynylene isophthalamide type polymer is treated with a long-chain fatty acid, a fluorinated or chlorinated aliphatic carboxylic acid or an aromatic hydrocarbon containing a

methyl group, a method in which a halogenated aromatic hydrocarbon is incroporated in a film of an m-phenylene isophthalamide type polymer and a method in which the surface of a film of an m-phenylene isophthalamide type polymer is coated with a silicone type polymer or a fluorine type polymer. These methods are disclosed, for example, in Japanese Laid-Open Patent Applications No. 122,160/76, 122,173/76, 122,174/76, 41,899/77 and 41,900/77. Furthermore, a method in which electric properties of the above-mentioned film of an m-phenylene isophthalamide type polymer are improved by biaxially stretching the film is disclosed in Japanese Laid-Open Patent Applications No. 56,169/77 and 152,973/77.

Moreover, Japanese Patent Publication No. 45,238/78 has proposed to reduce the hygroscopic property of a film of a halogen-substituted p-phenylene terephthalamide type polymer and simultaneously improve the electric properties thereof by heat-treating the film under tension.

Certain effects can be attained according to these proposals, but drastic improvements of the dimensional stability and electric properties are hardly attained because of the hygroscopic characteristic of polar amide groups of aromatic polyamides.

SUMMARY OF THE INVENTION

It is a primary object of the present invention to provide an aromatic polyamide shaped article which is highly improved in the electric characteristics, dimensional stability and heat resistance.

Other objects and advantages will be apparent from the following description.

In accordance with the present invention, there is provided a shaped article of an aromatic polyamide, which is prepared by incroporating in an aromatic polyamide type polymer 0.5 to 30% by weight of a silicone compound, especially a reactive silicone compound represented by the following general formula:

$X'Si(OR')_3$

wherein R' stands for an alkyl group (preferably having 1 to 5 carbon atoms) and X' stands for an organic functional group including an amino group, a mercapto group, a vinyl group, an epoxy group or a methacryloxy group,

and treating the polymer composition by at least one means selected from the group consisting of heating, ultraviolet ray irradiation and electron beam irradiation.

The aromatic polyamide type polymer used in the present invention is a polyamide which is comprised of recurring units represented by the following general formula:

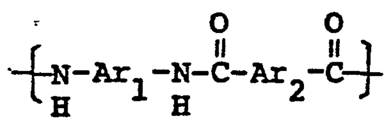 or 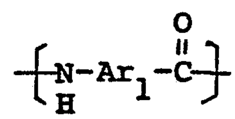

and which may be either a homopolymer or copolymer. It is preferable that the aromatic polyamide type polymer contains at least 50 mole % of the above recurring units.

In the above general formula, $Ar_1$ and $Ar_2$, which may be the same or different, stand for a divalent aromatic group, and typical instances are as follows:

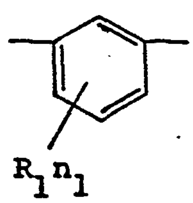 , 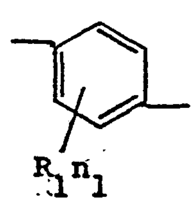 ,

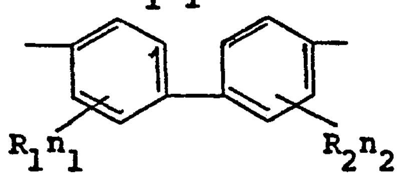 , 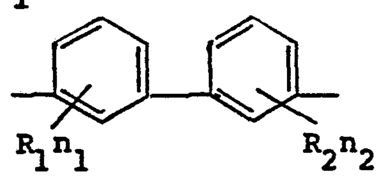 ,

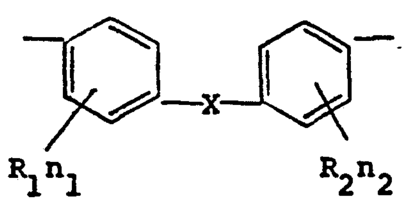 , 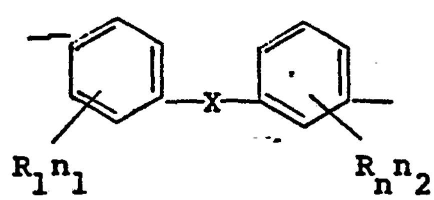 ,

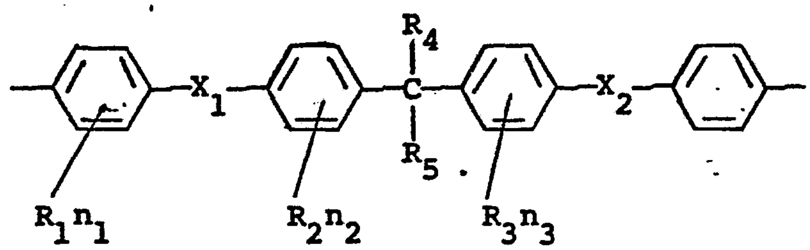

and

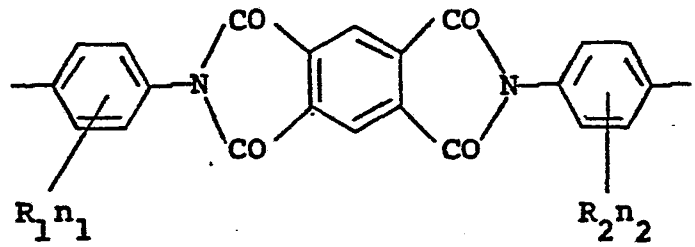

In the above formulae, $R_1$ , $R_2$ , $R_3$ , $R_4$ and $R_5$ independently stand for a lower alkyl group having 1 to 6 carbon atoms, a lower alkoxy group having 1 to 6 carbon atoms, a halogen atom or a nitro group, $n_1$ , $n_2$ and $n_3$ independently stand for an integer of from 0 to 4, and X, $X_1$ and $X_2$ independently stand for a member selected from

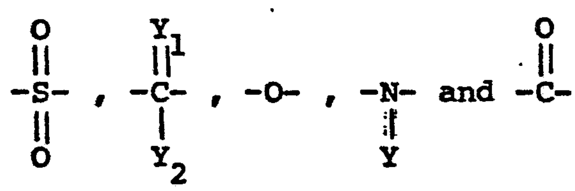

, , , and

in which Y, $Y_1$ and $Y_2$ stand for a hydrogen atom or a lower alkyl group having 1 to 6 carbon atoms.

As typical instances of the aromatic polyamide type polymer used in the present invention, there can be mentioned poly-m-phenylene isophthalamide, copolymers thereof, poly-m-phenylene terephthalamide, copolymers thereof, poly-p-phenylene isophthalamide, copolymers

thereof, poly-p-phenylene terephthalamide, copolymers thereof, poly-p-benzamide, copolymers thereof, poly-3,4'-diphenyl ether terephthalamide, copolymers thereof, polyamides prepared from 2,2-bis[4-(4-aminophenoxy)-phenyl]propane and terephthaloyl chloride or isophthaloyl chloride and copolymers thereof. However, these are mere exemplification and polymers used in the present invention are not limited to those exemplified above.

The foregoing aromatic polyamide type polymers may be prepared from predetermined aromatic dicarboxylic acid halides and aromatic diamines by a solution polymerization method, an interfacial polymerization method or the like.

As the silicone compound to be incorporated in the aromatic polyamide type polymer for attaining the intended effects of the present invention, there can be mentioned, for example, silicone oils such as methylsilicone oils, phenyl-modified silicone oils and amine-modified silicone oils. So-called silane coupling agents represented by the following general formula:

$$X'Si(OR')_3$$

wherein R' stands for an alkyl group preferably having 1 to 5 carbon atoms and X' stands for an organic functional group including an amino group, a mercapto group, a vinyl group, an epoxy group or a methacryloxy group,

are preferably used. As such silane coupling agent, there can be mentioned, for example, vinyltriethoxysilane, vinyltris-(2-methoxyethoxy)silane, γ-methacryloxypropyltrimethoxysilane, γ-aminopropyltrimethoxysilane, N-β-(aminoethyl)-γ-aminopropyltrimethoxysilane, β-(3,4-epoxycyclohexyl)ethyltrimethoxysilane, γ-glycidoxypropyltrimethoxysilane and γ-mercaptopropyltrimethoxysilane.

The silicone compound is used in an amount of 0.5 to 30% by weight, preferably 0.5 to 20% by weight, more preferably 0.5 to 10% by weight, based on the weight of the aromatic polyamide type polymer. If the silicone compound is incorporated in an amount larger than 30% by weight

based on the aromatic polyamide type polymer, the inherent characteristic of the aromatic polyamide type polymer, particularly, the high heat resistance, is degraded. If the silicone compound is incorporated in an amount of smaller than 0.5% by weight based on the aromatic polyamide type polymer, the intended effects of the present invention are not satisfactorily attained.

A minor amount of a crosslinking compound having at least one member selected from groups represented by the following formulae may be incorporated, in addition to the silicone compound, with the aromatic polyamide type polymer:

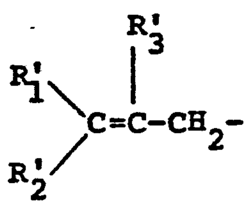 , 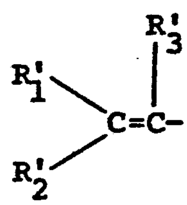 , 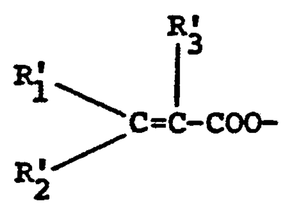 ,

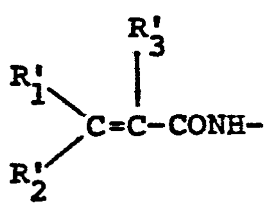 and 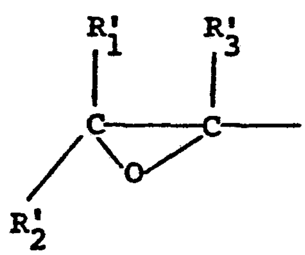

wherein $R_1'$ , $R_2'$ and $R_3'$ independently stand for a hydrogen atom or an alkyl group having 1 to 6 carbon atoms.

By the incorporation of the crosslinking compound, the beat resistance and electric characteristics of the resulting aromatic polyamide shaped article can be enhanced. The amount of the crosslinking compound is preferably 0.5 to 10% by weight, more preferably 0.5 to 5% by weight, based on the weight of the aromatic polyamide type polymer.

As typical instances of the crosslinking compound to be incorporated in the aromatic polyamide type polymer the following compounds can be mentioned.

(1) Compounds having at least one group represented by the following general formulae:

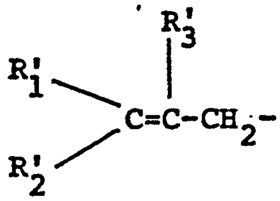 , 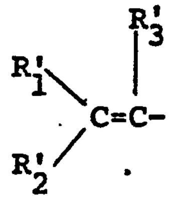 or 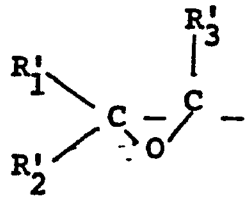

wherein $R'_1$ , $R'_2$ and $R'_3$ independently stand for a hydrogen atom or an alkyl group having 1 to 6 carbon atoms.

For exapmple, there can be mentioned compounds represented by the following general formulae:

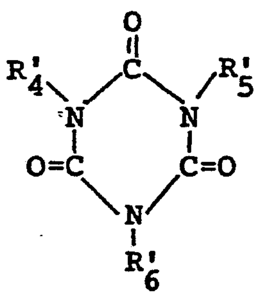 , 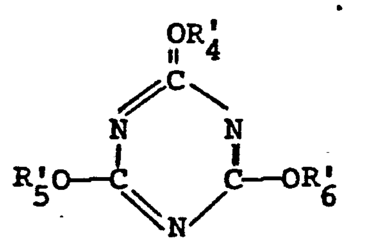 ,

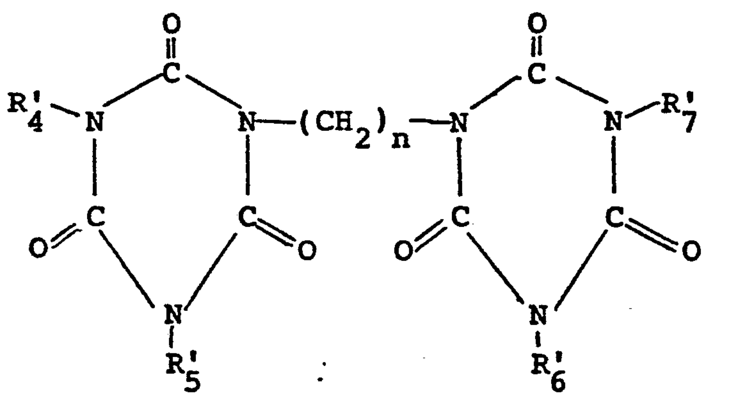 and

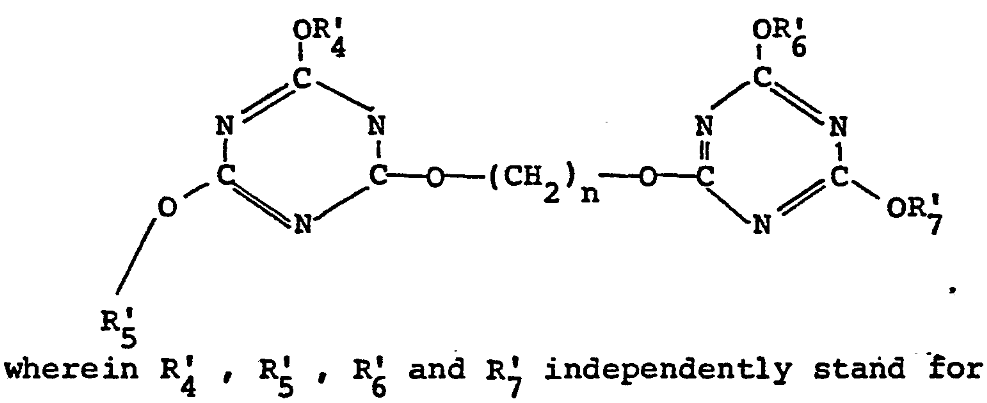

wherein $R'_4$ , $R'_5$ , $R'_6$ and $R'_7$ independently stand for a hydrogen atom, an alkyl group having 1 to 10 carbon atoms, a hydroxyalkyl group having 1 to 10 carbon atoms, a carboxyalkyl group in which the alkyl moiety has 1 to 10 carbon

atoms, or a halogenoalkyl group having 1 to 10 carbon atoms, and n is an integer of at least 1, with the proviso that at least one of $R_4'$, $R_5'$, $R_6'$ and $R_7'$ should be a functional group having a radical reactivity, such as an alkenyl group or an allyl group.

As specific examples of the compounds represented by the above formulae, there can be mentioned triallyl cyanurate, diallylmethyl cyanurate, polyethylene allyl cyanurate, triallyl isocyanurate, diallylmethyl isocyanurate, polyethylene allyl isocyanurate, ethylene-bis(diallyl cyanurate), tetramethylene-bis(diallyl isocyanurate), ethylene-bis(diallyl isocyanurate), tetramethylene--bis(diallyl isocyanurate), diallylhydroxyethyl isocyanurate, diallylcarboethoxy cyanurate, diallylcarboethoxy isocyanurate, diallylchloroethyl cyanurate, diallylchloroethyl isocyanurate, trisglycidyl isocyanurate and trisglycidyl cyanurate. As another typical instances, there can be mentioned dicarboxylic acid diallyl esters such as diallyl malonate, diallyl succinate, dially glutarate, diallyl adipate and diallyl azelaate, and allyl--substituted melamines such as N,N-diallylmelamine, hexa--allyloxymethylmelamine, hexa-allylmelamine and triallylmelamine.

(2) Compounds having at least one group represented by the following general formula:

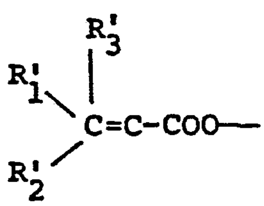

or

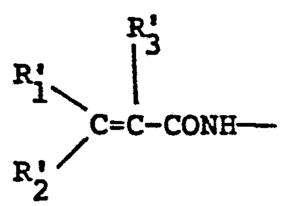

wherein $R_1'$, $R_2'$ and $R_3'$ independently stand for a hydrogen atom or an alkyl group having 1 to 6 carbon atoms.

As typical instances of the above compounds, there can be mentioned acrylic acid esters such as methyl acrylate, ethyl acrylate and butyl acrylate, methacrylic acid esters such as methyl methacrylate, ethyl methacrylate and

2-hydroxyethyl methacrylate, acrylic acid and methacrylic acid esters of ethylene glycol and polyethylene glycol, and acrylic acid and methacrylic acid amides such as acrylamide and methacrylamide.

If desired, other ordinary crosslinking compounds may be used in combination with the above-mentioned crosslinking compounds.

The shaped article of the present invention is prepared as follows. The aromatic polyamide type polymer is dissolved in an amide type solvent, such as dimethylformamide, dimethyl-acetamide, N-methylpyrrolidone or hexamethylphosphoramide, which may contain, if desired, a metal halide such as calcium chloride, lithium chloride, magnesium chloride, lithium bromide, calcium bromide or ammonium bromide, and the silicone compound and the optional crosslining compound are incorporated in the resulting polymer solution to form a shaping dope composition. The resulting dope composition can be shaped into fiber, film, pulp or the like according to a conventional dry, wet, or semi-dry semi-wet method.

In the case where the aromatic polyamide shaped article is a film, the polymer dope composition having the silicone compound and the optional crosslinking compound, incorporated therein, may be shaped into a film batchwise or in a continuous manner according to the dry, wet, or semi-dry semi-wet method, and it is preferred that the so formed film be uniaxially or biaxially stretched in hot water or a steam atmosphere. The aromatic polyamide film having incorporated therein 0.5 to 30% by weight of the silicone compound is highly improved in the stretchability, especially the adaptability to sequential biaxial stretching. This is one of characteristic features of the present invention.

The stretched film is dried while keeping the length constant, and then, the film is irradiated with ultraviolet rays or electron beams, or the film is heat-treated at a temperature of at least 100°C, preferably higher than

200°C, more preferably higher than 300°C, under tension or while keeping the length constant according to the intended objects, whereby an aromatic polyamide film excellent in the electric properties, the dimensional stability on abosrpotion of moisture and the heat resistance can be obtained.

In the case where the aromatic polyamide shaped article is a fiber, the above-mentioned polymer dope composition may be shaped into a fiber according to any of various customary spinning methods, and the spun fiber may be stretched in boiling water or on a hot plate, whereby a fiber having excellent properties can be obtained. By incorporating the silicone type compound, the stretchability of the fiber is highly improved. Also this is one of freatures of the present invention.

When an aromatic polyamide shaped article obtained by incorporation of a so-called silane coupling agent of the general formula $X'Si(OR')_3$ as the silicone type compound is heat-treated at a temperature of at least 100°C, preferably a temperature higher than 200°C, if the shaped article is a sheet-like product such as a film, the transparency of the shaped article is remarkably enhanced by reaction between the aromatic polyamide and the silicone compound.

In practising the present invention, there may be adopted not only the above-mentioned method in which the silicone compound and the optional crosslinking compound are incorporated in a polymer solution, but also a method in which the silicone compound and the optional crosslinking compound are mixed with a powder of the aromatic polyamide directly or after dissolution in a low-boiling-point solvent such as acetone, methanol or benzene and, thereafter, the low-boiling-point solvent is removed.

In this case, the polymer having incorporated therein the silicone compound and the optional crosslinking compound may be dissolved in an amide type solvent as described above and the polymer solution may be shaped according to above-mentioned shaping method. Furthermore, there may be

adopted a method in which a polymer composition formed by incorporating the silicone compound and the optional crosslinking compound into the aromatic polyamide type polymer may be directly formed into a sheet or the like by a compression molding machine.

When a reactive silicone compound represented by the general formula $X'Si(OR')_3$ is used as the silicone type compound in the above-mentioned compression molding method, the silicone compound acts as a plasticizer, and if a compression heat treatment is carried out at a temperature higher than 100°C, preferably higher than 150°C, the aromatic polyamide type polymer is reacted with the silicone compound to provide a novel shaped article. The above-mentioned reactive silicone compound is effective as the reactive plasticizer in this method. In short, this reactive silicone compound is effective for attaining the novel and valuable effects of the present invention. The upper limit of the temperature for the above heat treatment may be appropriately set. For example, the upper limit of the treatment temperature is about 400°C in case of a poly-m-phenylene isophthalamide type polymer and is about 600°C in case of a poly-p-phenylene terephthalamide polymer.

When both the silicone compound and the crosslinking compound are incorporated in the aromatic polyamide type polymer, any means of heating, ultraviolet irradiation or electron beam irradiation can be advantageously employed for the treatment of the polymer composition. However, when only the silicone compound is incorporated (i.e., the crosslinking compound is not incorporated) in the polymer, it is preferable that the polymer composition is heated rather than irradiated with ultraviolet rays or electron beams.

The present invention will now be described in detail with reference to the following Examples. Incidentally, in these Examples, all of "parts" are by weight.

Example 1

A polymer solution comprising 20 parts of an

m-phenylene isophthalamide polymer containing 3 mole % of terephthalic acid units (having an intrinsic viscosity of 1.36 as measured in N-methylphrrolidone at a polymer concentration of 0.5% by weight), 4 parts of lithium chloride, 1 part of a phenyl-modified silicone oil ("TSF 433" supplied by Toshiba Silicone K.K.) and 80 parts of dimethylacetamide was cast on a glass sheet by a doctor knife, dried at 140°C for 7 minutes and dipped in water to obtain a transparent film. The obtained film was stretched sequentially in the biaxial directions in hot water maintained at 85°C at a draw ratio of 1.8 in each direction. The resulting film was dried while keeping the length constant, to obtain a film having a thickness of 25 microns. The film was heat-treated at 350°C while keeping the length constant.

The properties of the so-obtained aromatic polyamide film are shown in Table 1, from which it is seen that the film is excellent in various properties.

For comparison, a film was prepared in the same manner as described above except that the phenyl-modified silicone oil, TSF 433, was not used. The properties of such comparative film are also shown in Table 1.

Table 1

| Physical Properties | Film of Example 1 | Comparative Film |
|---|---|---|
| Strength (Kg/mm$^2$) at break | 18.7 | 18.0 |
| Elongation (%) at break | 73 | 75 |
| Breakdown voltage (KV/mm) | 235 | 203 |
| Percent shrinkage (%) after 30 seconds' treatment in soldering bath at 120°C | 1.8 | 3.8 |
| Dimensional change ratio* (%) | 1.6 | 3.5 |

Note
*: the ratio in percent of the difference between the dimension after drying at 120°C for 30 minutes and the dimension after standing at a relative humidity of 90% for 48 hours to the original dimension

Examples 2 through 9

Films were prepared in the same manner as described in Example 1 except that various silane type compounds shown in Table 2 were used instead of the phenyl-modified silicon oil, TSF 433, used in Example 1, the properties of the obtained films are shown in Table 2, from which it is seen that each film is highly improved in the electric properties and dimesion stability on absorption of moisture.

Table 2

| Example No. | Silicone Compound | | Breakdown Voltage (KV/mm) | Percent Shrinkage (%) after 30 Seconds' Treatment in Soldering Bath at 260°C | Dimensional Change Ratio (%) |
|---|---|---|---|---|---|
| | Kind | Amount(%) | | | |
| 2 | TSF 433 | 10 | 240 | 1.6 | 1.5 |
| 3 | TSF 451 | 5 | 223 | 1.9 | 1.7 |
| 4 | ditto | 10 | 231 | 1.7 | 1.6 |
| 5 | NUCA186 | 5 | 228 | 1.4 | 1.3 |
| 6 | NUCA189 | 5 | 229 | 1.8 | 1.6 |
| 7 | ditto | 10 | 232 | 1.6 | 1.5 |
| 8 | SH6040 | 3 | 235 | 1.4 | 1.4 |
| 9 | ditto | 5 | 242 | 1.3 | 1.2 |

Note

1) The dimensional change ratio is as defined in Table 1.

2) The silicone compounds used are as follows.

TSF 433: phenyl-modified silicone oil supplied by Toshiba Silicone K.K.

TSF 451: methylsilicone oil supplied by Toshiba Silicone K.K.

NUCA-186: β-(3,4-epoxycyclohexyl)ethyltrimethoxysilane supplied by Nippon Unicar K.K.

NUCA-189: γ-mercaptopropyltrimethoxysilane supplied by Nippon Unicar K.K.

SH-6040: γ-glycidoxypropyltrimethoxysilane supplied by Toray Silicone K.K.

Example 10

A polymer solution comprising 6 parts of an aromatic polyamide type polymer made of an diamine component consisting of 60 mole % of m-phenylene diamine units and 40 mole % of p-phenylene diamine units and terephthaloy chloride (having an intrinsic viscosity of 4.29 as measured in concentrated sulfuric acid at a polymer concentration of 0.5% by weight), 2.8 parts of calcium chloride, 0.6 part of γ-glycidoxypropyltrimethoxysilane ("SH-6040" supplied by Toray Silicone K.K.), 0.8 part of water and 90.0 parts of N-methyl-2-pyrrolidone was cast on a glass sheet by a doctor knife, dried at 140°C for 7 minutes and dipped in water the obtain a transparent film. When stretching of the film was conducted in boilding water, it could be stably stretched biaxially at a draw ratio of 1.5 in each direction. The stretched film was dried while keeping the length constant, and was thermally set at 350°C while keeping the length constant, to obtain a film having a thickness of 25 microns.

The breakdown voltage of the film was 235 KV/mm and the percent shrinkage of the film after 10 seconds' treatment in a soldering bath at 260°C was 1.2%.

In a comparative film prepared in the same manner as described above except that γ-glycidoxypropyltrimethoxysilane was not used, the maximum biaxial draw ratio was 1.2. The breakdown voltage of the obtained film was 197 KV/m and the percent shrinkage of the obtained film after 10 seconds' treatment in a soldering bath at 260°C was 3.2%.

Example 11

A polymer solution comprising 6 parts of a p-phenylene terephthalamide type polymer containing 50 mol % of 3,4'-diaminodiphenyl ether units (having an intrinsic viscosity of 2.89 as measured in concentrated sulfuric acid at a polymer concentration of 0.5% by weight), 2.3 parts of calcium chloride, 0.6 part of γ-glycidoxypropyltrimethoxysilane ("SH-6040" supplied by Toray Silicone K.K.) and 94 parts of N-methyl-2-pyrrolidone was cast on a glass

sheet, dipped in water and biaxillay stretched at a draw ratio of 1.8 in each direction in hot water at 95°C. The stretched film was dried and thermally set in the same manner as described in Example 10.

The percent shrinkage of the obtained film after 10 seconds' treatment in a soldering bath at 260°C was 0.50%.

For comparison, a film was prepared in the same manner as described above except that γ-glycidoxypropyltrimethoxysilane was not added. The stretchability of the film was poor and, particularly, the second stretching in the sequential biaxial drawing at a draw ratio exceeding 1.3 was difficult. The percent shrinkage of the obtained film after 10 seconds' treatment in a soldering bath at 260°C was 1.2%.

Example 12

In 10 parts of acetone was dissolved 1 part of γ-glycidoxypropyltrimethoxysilane ("SH-6040" supplied by Toray Silicone K.K.), and the solution was mixed with 10 parts of an m-phenylene isophthalamide polymer containing 3 mole % of terephthalic acid units (having an intrinsic viscosity of 1.36 as measured in N-methylpyrrolidone at a polymer concentration of 0.5% by weight).

Acetone was removed by drying at room temperature and subsequently at 80°C, and the residual composition was compression-molded at 170°C under 200 $kg/cm^2$ to obtain a sheet having a relatively high transparency.

When γ-glycidoxypropyltrimethoxysilane was not used, a shaped article obtained by performing compression molding in the same manner as described above was opaque and brittle.

The present invention will now be described in detail with reference to the following Examples. Incidentally, in these Examples, all of "parts" are by weight.

Example 13

A polymer solution comprising 20 parts of an m-phenylene isophthalamide polymer containing 3 mole % of terephthalic acid units (having an intrinsic viscosity of

1.36 as measured in N-methylpyrrolidone at a polymer concentration of 0.5% by weight), 4 parts of lithium chloride, 0.6 part of triallyl isocyanurate, 1 part of γ-glycidoxypropyltrimethoxysilane and 80 parts of dimethylacetamide was cast on a glass sheet by a doctor knife, dried at 140°C for 7 minutes and dipped in water to obtain a transparent film. The obtained film was stretched sequentially in biaxial directions in hot water maintained at 95°C at a draw ratio of 1.8 in each direction. The film was dried while keeping the length constant. The resulting stretched film was irradiated for 5 minutes with ultraviolet rays by a 2 KW ultraviolet lamp and then heat-treated at 350°C while keeping the length constant.

The properties of the so-obtained aromatic polyamide film are shown in Table 3, from which it is seen that the film is excellent in various properties.

For comparison, a film was prepared in the same manner as described above except that neither triallyl isocyanurate nor γ-glycidoxypropyltrimethoxysilane was used. The properties of such comparative film are also shown in Table 3.

Table 3

| Film Specimen | Breakdown Voltage (KV/mm) | Percent Shrinkage (%) after 10 Seconds' Treatment in Soldering Bath at 260°C | Dimentional Change Ratio*** (%) |
|---|---|---|---|
| Films of Present Invention | | | |
| both TC* and GPTMS** added | 280 | 1.0 | 0.89 |
| only GPTMS added | 234 | 1.8 | 1.6 |
| Comparative Film | | | |
| None of TC and GPTMS added | 208 | 3.8 | 3.5 |

Note * TC = Triallyl cyanurate

** GPTMS = γ-glycidoxypropyltrimethoxysilane

*** the ratio (in %) of the difference between the dimension after drying at 120°C for 30 minutes and the dimension after standing at a relative humidity of 90% for 48 hours to the original dimension.

Examples 14 through 21

Films were prepared in the same manner as described in Example 13 except that various crosslinking compounds and silane compounds shown in Table 4 were used instead of triallyl isocyanurate and γ-glycidoxypropyltrimethoxysilane used in Example 13. The properties of the obtained films are shown in Table 4, from which it is seen that each film is excellent in various properties.

Table 4

| Example No. | Crosslinking Compound | Silicone Compound | Breakdown Voltage (KV/mm) | Percent Shrinkage (%) after 10 Seconds' Treatment in Soldering Bath at 260°C | Dimensional Change Ratio (%) |
|---|---|---|---|---|---|
| 14 | Triallyl isocyanurate | Phenylmodified silicone oil TSF 433 | 280 | 0.95 | 1.3 |
| 15 | ditto | β-(3,4epoxycyclo hexyl)ethyltrimethoxy-silane | 276 | 1.01 | 1.0 |
| 16 | ditto | γ-mercaptopropyltri methoxysilane | 283 | 0.80 | 1.2 |
| 17 | ditto | Methylsilicone oil TSF 451 | 267 | 0.83 | 1.1 |
| 18 | Trially cyanurate | γ-glycidoxypropyltri methoxysilane | 273 | 0.83 | 1.2 |
| 19 | Dially malonate | ditto | 239 | 1.02 | 1.3 |
| 20 | Trisglycidyl isocyanurate | ditto | 285 | 0.81 | 1.0 |
| 21 | ditto | β-(3,4-epoxycyclo-hexyl)ethyltrimethoxy-silane | 277 | 0.83 | 1.1 |

Note 1) The amount of the crosslinking compound incorporated is 3% by weight based on the polymer.

2) The amount of the silicone compound incorporated is 5% by weight based on the polymer.

Example 22

A polymer solution comprising 6 parts of an aromatic polyamide type polymer made from an diamine component consisting of 60 mole % of m-phenylene diamine units and 40 mole % of p-phenylene diamine units and terephthaloyl chloride (having an intrinsic viscosity of 4.29 as measured in concentrated sulfuric acid at a polymer concentration of 0.5% by weight), 2.8 parts of calcium chloride, 0.18 part of triallyl isocyanurate, 0.3 part of γ-glycidoxypropyltrimethoxysilane ("SH-6040" supplied by Toray Silicone K. K.), 0.8 part of water and 90.9 parts of N-methyl-2-pyrrolidone was cast on a glass sheet by a doctor knife, dried at 140°C for 7 minutes and dipped in water to obtain a transparent film. When stretching of the film was conducted in boiling water, it could be stably stretched biaxially at a draw ratio of 1.5 in each direction. The stretched film was irradiated for 1 minute with ultraviolet rays by a 2 KW ultraviolet lamp, and was thermally set at 350°C while keeping the length constant, to obtain a film having a thickness of 25 microns.

The breakdown voltage of the film was 280 KV/mm and the percent shrinkage of the film after 10 seconds' treatment in a soldering bath at 260°C was 0.7%.

Example 23

A polymer solution comprising 6 parts of a p--phenylene terephthalamide type polymer containing 50 mole % of 3,4'-diaminodiphenyl ether units (having an intrinsic viscosity of 2.89 as measured in concentrated sulfuric acid at a polymer concentration of 0.5% by weight), 2.3 parts of calcium chloride, 0.18 part of triallyl isocyanurate, 0.3 part of γ-glycidoxypropyltrimethoxysilane ("SH-6040" supplied by Toray Silicone K. K.) and 94 parts of N-methyl--2-pyrrolidone was cast on a glass sheet, dipped in water and biaxially stretched at a draw ratio of 1.8 in each direction in hot water at 95°C. The stretched film was dried, irradiated with ultraviolet rays and thermally set in the same manner as described in Example 22.

The percent shrinkage of the obtained film after 10 seconds' treatment in a soldering bath at 260°C was 0.3%.

Example 24

In 10 parts of acetone were dissolved 1 part of γ-glycidoxypropyltrimethoxysilane ("SH-6040" supplied by Toray Silicone K. K.) and 0.3 part of triallyl isocyanurate, and the solution was mixed with 10 parts of an m-phenylene isophthalamide polymer containing 3 mole % of terephthalic acid units (having an intrinsic viscosity of 1.36 as measured in N-methylpyrrolidone at a polymer concentration of 0.5% by weight).

Acetone was removed by drying at room temperature and subsequently at 80°C, and the residual composition was compression-molded at 170°C under 200 $kg/cm^2$ to obtain a sheet having a relatively high transparency.

When γ-glycidoxypropyltrimethoxysilane was not used, a shaped article obtained by performing compression molding in the same manner as described above was opaque and brittle.

CLAIMS

1. A shaped article of an aromatic polyamide, which is prepared by incorporating in an aromatic polyamide type polymer 0.5 to 30% by weight, based on the weight of the aromatic polyamide type polymer, of a silicone compound and treating the resulting polymer composition by at least one means selected from the group consisting of heating, ultraviolet ray irradiation and electron beam irradiation.

2. A shaped article according to claim 1, wherein said aromatic polyamide type polymer contains at least 50% by mole of recurring units represented by the general formula:

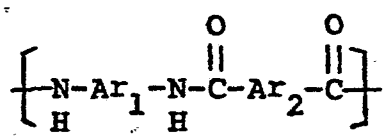 or 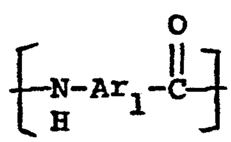

wherein $Ar_1$ and $Ar_2$ independently stand for a divalent aromatic radical.

3. A shaped article according to claim 2, wherein $Ar_1$ and $Ar_2$ in the general formula are selected from the group consisting of:

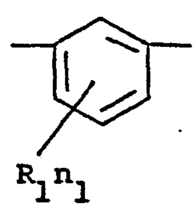 , 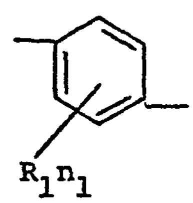 ,

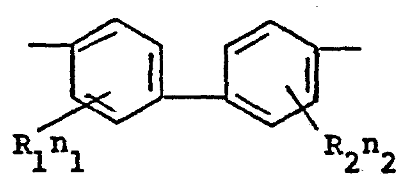 , 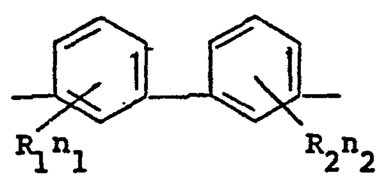 ,

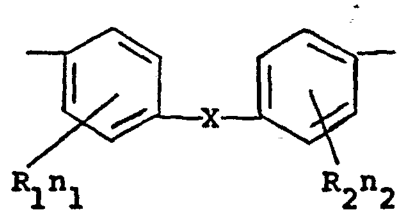 , 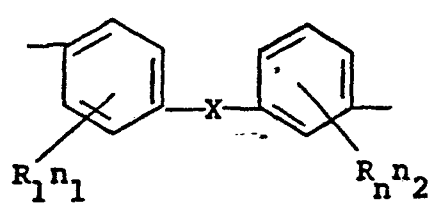 ,

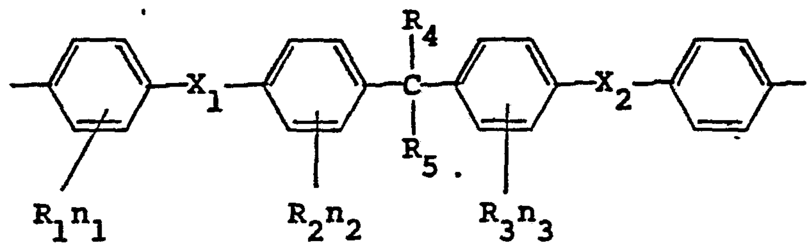

and

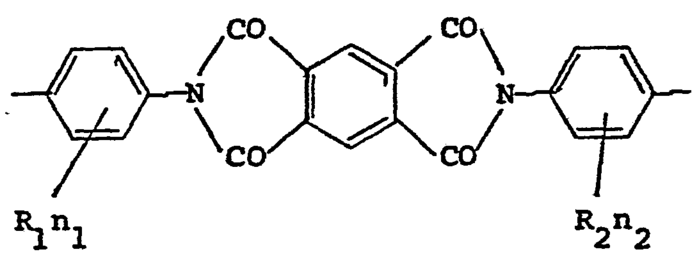

wherein $R_1$ , $R_2$ , $R_3$ , $R_4$ and $R_5$ independently stand for a lower alkyl group having 1 to 6 carbon atoms, a lower alkoxy group having 1 to 6 carbon atoms, a halogen atom or a nitro group, $n_1$ , $n_2$ and $n_3$ independently stand for an interger of from 0 to 4, and X, $X_1$ and $X_2$ independently stand for a member selected from

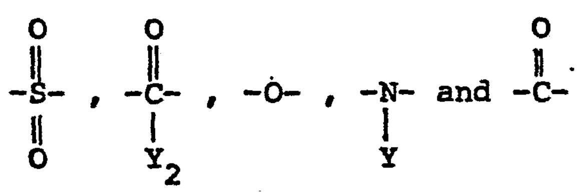

in which Y, $Y_1$ and $Y_2$ stand for a hydrogen atom or a lower alkyl group having 1 to 6 carbon atoms.

4. A shaped article according to claim 1, wherein the silicone compound is represented by the general formula:

$$X'Si(OR')_3$$

wherein R' stands for an alkyl group having 1 to 5 carbon atoms and X' stands for an organic functional group including an amino group, a mercapto group, a vinyl group, an epoxy group or a methacryloxy group.

5. A shaped article according to claim 1 or 4, wherein the amount of the silicone compound is in the range of from 0.5 to 20% by weight based on the weight of the aromatic polyamide type polymer. .

6. A shaped article according to claim 1 wherein, in addition to the silicone compound, up to 10% by weight, based on the weight of the aromatic polyamide type polymer, of a crosslinking compound is incorporated in the aromatic polyamide type polymer; said crosslinking compound having at least one member selected from groups represented by the following formulae:

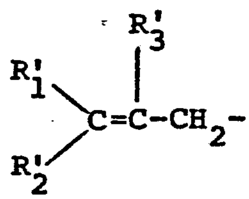 , 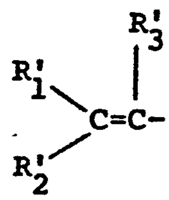 , 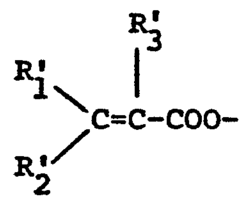 ,

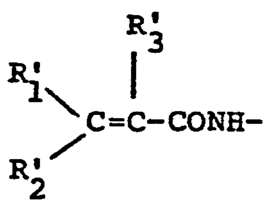 and 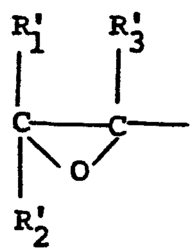

wherein $R_1'$ , $R_2'$ and $R_3'$ independently stand for a hydrogen atom or an alkyl group having 1 to 6 carbon atoms.

7. A shaped article according to claim 6 wherein the amount of the crosslinking compound is in the range of from 0.5 to 5% by weight based on the weight of the aromatic polyamide type polymer.

8. A shaped article according to claim 1, 4 or 6, wherein the polymer composition having the silicone compound incorporated therein is treated with heat at a temperature of from 100° to about 600°C.

9. A shaped article according to claim 1 or 6, wherein the shaped article is fiber.

10. A shaped article according to claim 1 or 6, wherein the shaped article is film.